# EUROPÄISCHE PATENTSCHRIFT

(11) **EP 0 894 299 B1**
(45) Veröffentlichungstag und Bekanntmachung des Hinweises auf die Patenterteilung: **30.08.2000**
(21) Anmeldenummer: 97908262.5
(22) Anmeldetag: 19.03.1997
(51) Int. Cl.: G05D 16/20, G05D 16/16, F15B 13/042

(54) **VORGESTEUERTES 3-WEGE-DRUCKREGELVENTIL**
PRECONTROLLED 3-WAY PRESSURE CONTROL VALVE
SOUPAPE DE REGULATION DE PRESSION A 3 VOIES PILOTEE

(30) Priorität: 20.04.1996 DE 19615789
(43) Veröffentlichungstag der Anmeldung: 03.02.1999
(73) Patentinhaber: Mannesmann Rexroth AG, 97816 Lohr am Main (DE)
(72) Erfinder: MACHAT, Götz-Dieter, D-97816 Lohr (DE); MEYER, Karl-Josef, D-97794 Rieneck (DE); STROKA, Wilfried, D-97846 Partenstein (DE); ZÜGNER, Jürgen, D-97794 Rieneck (DE)
(86) Internationale Anmeldenummer: EP9701380
(87) Internationale Veröffentlichungsnummer: WO9740436

(56) Entgegenhaltungen:
- EP-A- 0 467 128
- DE-A- 3 204 055
- US-A- 4 321 941
- US-A- 4 463 660
- US-A- 4 531 707
- US-A- 4 785 849

## Beschreibung

Die Erfindung geht aus von einem vorgesteuerten 3-Wege-Druckregelventil, das die Merkmale aus dem Oberbegriff des Anspruchs 1 aufweist.

Ein vorgesteuertes 3-Wege-Druckregelventil ist zum Beispiel aus dem Buch der "Hydraulik Trainer Band 1", 1991 herausgegeben von der Mannesmann Rexroth GmbH, Seiten 236 bis 239 bekannt. Bei diesem Druckregelventil besitzt der Hauptkolben einen Kolbenbund, mit dem die mittlere Steuerkammer gegen die erste und die zweite Steuerkammer verschlossen werden kann und an den sich beidseitig jeweils ein Kolbenhals anschließt, von dem aus sich über den Umfang verteilte Steuernuten in den Kolbenbund hineinerstrecken. Die von dem einen Kolbenhals ausgehenden Steuernuten haben von den vom anderen Kolbenhals ausgehenden Steuernuten einen axialen Abstand, der in etwa gleich der axialen Ausdehnung der mittleren Steuerkammer ist.

Das Vorsteuerventil des bekannten vorgesteuerten Druckregelventils ist ein direktgesteuertes Druckregelventil mit einem Druckanschluß, einem Tankanschluß und einem Regelanschluß. Dieser ist mit einem Druckraum vor der einen Stirnseite des Hauptkolbens fluidisch verbunden. Dem Druckanschluß des Vorsteuerventils fließt Steueröl vom Druckanschluß des Hauptventils zu. Je nach Einstellung einer Feder wird im Regelanschluß des Vorsteuerventils und damit vor der einen Stirnseite des Hauptkolbens ein bestimmter Druck eingeregelt. Die mittlere Steuerkammer der Ventilbohrung des Hauptventils ist über einen Gehäusekanal mit einem Druckraum vor der anderen Stirnseite des Hauptkolbens verbunden. Es stellt sich jeweils ein solcher Druck in der mittleren Steuerkammer und damit im Regelanschluß ein, daß am Hauptkolben ein Gleichgewicht zwischen den verschiedenen Druck- und Federkräften besteht. Ein vorgesteuertes 3-Wege-Druckregelventil, bei dem dem Vorsteuerventil das Steueröl vom Druckanschluß des Hauptventils zugeführt wird, bezeichnet man als hochdruckgesteuert. Der besondere Vorteil dieser Art der Vorsteuerung besteht darin, daß der Hauptkolben auch bei einem großen Volumenstrom und einer großen Druckdifferenz zwischen dem Druckanschluß und dem Regelanschluß des Hauptventils nicht zuzieht, d.h. die Verbindung zwischen dem Druckanschluß und dem Regelanschluß unterbricht und damit die Einsatzmöglichkeit des Ventils beschränkt. Nachteilig ist, daß das bekannte vorgesteuerte Druckregelventil bei bestimmten Betriebsbedingungen zur Instabilität neigt, also Druckschwingungen am Regelanschluß auftreten.

Aus der DE 32 04 055 A1 ist ein vorgesteuertes Druckregelventil mit den Merkmalen aus dem Oberbegriff des Patentanspruchs 1 bekannt. Bei diesem vorgesteuerten 3-Wege-Druckregelventil ist das Vorsteuerventil als direktgesteuertes Druckbegrenzungsventil ausgebildet. Diesem Druckbegrenzungsventil fließt Steueröl über Bohrungen im Regelkolben, eine im Regelkolben ausgebildete Steuerdüse und über einen vor der einen Stirnseite des Regelkolbens befindlichen, ersten Druckraum vom Regelanschluß zu. Ein vorgesteuertes Druckregelventil mit einer Entnahme des Steueröls vom Regelanschluß bezeichnet man als niederdruckgesteuert. Bei einem solchen Druckregelventil ist die Instabilität, also die Neigung zu Druckschwingungen am Regelanschluß, geringer als bei einem hochdruckgesteuerten Druckregelventil.

Bei dem aus der DE 32 04 055 A1 bekannten vorgesteuerten Druckregelventil befindet sich in weiterer Übereinstimmung mit dem Oberbegriff des Patentanspruchs 1 vor der anderen Stirnseite des Regelkolbens ein zweiter Druckraum, der ebenfalls mit dem Regelanschluß fluidisch verbunden ist. Weiterhin ist vom Regelkolben eine dem Regelanschluß zugeordnete, dritte Steuerkammer der Ventilbohrung zur Erhöhung des Regeldruckes mit einer einem Druckanschluß zugeordneten, ersten Steuerkammer und zur Erniedrigung des Regeldruckes mit einer einem Tankanschluß zugeordneten, zweiten Steuerkammer der Ventilbohrung verbindbar. Dabei wird der Regelkolben im Sinne einer Verbindung der dritten Steuerkammer mit der ersten Steuerkammer vom im ersten Druckraum herrschenden Druck und von der Kraft einer Feder und entgegengerichtet dazu im Sinne einer Verbindung der dritten Steuerkammer mit der zweiten Steuerkammer von dem im zweiten Druckraum herrschenden Druck beaufschlagt.

Der Regelkolben des aus der DE 32 04 055 bekannten vorgesteuerten Druckregelventils besitzt eine umlaufende Ringnut, in der sein Außendurchmesser kleiner ist als der Durchmesser der Ventilbohrung und deren Breite in axialer Richtung annähernd gleich dem lichten Abstand der ersten und der zweiten Steuerkammer voneinander ist. Über diese umlaufende Ringnut werden die verschiedenen fluidischen Verbindungen zwischen den drei Steuerkammern hergestellt. Im Bereich der Ringnut geht durch den Regelkolben eine Querbohrung hindurch, die eine zentral durch den Regelkolben hindurchgehende Axialbohrung trifft, in der sich zum ersten Druckraum hin die Steuerdüse befindet und die in den zweiten Druckraum mündet.

Ziel der Erfindung ist es, ein vorgesteuertes 3-Wege-Druckregelventil mit den Merkmalen aus dem Oberbegriff des Anspruchs 1 so weiterzuentwickeln, daß es unter Beibehaltung eines sehr stabilen Verhaltens bis zu großen Volumenströmen bei einer hohen Druckdifferenz zwischen dem Druckanschluß und dem Regelanschluß gegen ein Zuziehen gefeit ist.

Dieses Ziel wird bei einem vorgesteuerten 3-Wege-Druckregelventil, das die Merkmale aus dem Oberbegriff des Anspruchs 1 aufweist, erfindungsgemäß dadurch erreicht, daß man dieses Ventil zusätzlich mit den Merkmalen aus dem kennzeichnenden Teil des Anspruchs 1 ausstattet. Das erfindungsgemäße 3-Wege-Druckregelventil ist also niederdruckgesteuert, da das Steueröl dem Vorsteuerventil vom Regelanschluß bzw. von einem Bereich des Ventils in dem der Regeldruck herrscht, zugeführt wird. Durch diese Art der Steuerölentnahme und durch die Art des Vorsteuerventils zeigt das Druckregelventil ein stabiles Verhalten.

Für das allgemeine Verständnis eines vorgesteuertes 3-Wege-Druckregelventils genügt es, davon auszugehen, daß in allen offen mit dem Regelanschluß verbundenen Räumen des Ventils der gleiche statische Druck, nämlich der Regeldruck herrscht. Bei näherer Betrachtung stellt man jedoch fest, daß durchaus örtliche Abweichungen vom Regeldruck bestehen, die durch die Geometrie des Hauptkolbens, den man auch als Regelkolben bezeichnen kann, und der Hohlräume im Ventilgehäuse bedingt sind, und daß deshalb die Geometrie und die Stelle, an der man das zum Vorsteuerventil fließende Steueröl entnimmt, die Funktion des Druckregelventils beeinflussen. Bei einem erfindungsgemäßen vorgesteuerten 3-Wege-Druckregelventil ist es nun gelungen, durch die besondere Art des Hauptkolbens auch bei einer Niederdrucksteuerung und dem damit verbundenen stabilen Verhalten ein Zuziehen des Ventils auch bei großen Volumenströmen und hohen Druckdifferenzen zwischen dem Druckanschluß und dem Regelanschluß zu vermeiden.

Vorteilhafte Ausgestaltungen eines erfindungsgemäßen vorgesteuerten 3-Wege-Druckregelventils kann man den Unteransprüchen entnehmen. Dabei betreffen die Ansprüche 2 bis 11 die Ausgestaltung des Regelkolbens im Hinblick auf den Hohlraum in ihm und im Hinblick auf die Langlöcher, die eine Verbindung zwischen dem Außenumfang des Regelkolbens und dem Hohlraum schaffen. Die Ansprüche 12 bis 17 beziehen sich in erster Linie darauf, wie die beiden Druckräume vor den Stirnseiten des Regelkolbens mit dem Regelanschluß und mit dem Vorsteuerventil verbunden sind.

Im Hinblick auf die Gestaltung der Langlöcher hat sich als besonders vorteilhaft erwiesen, wenn gemäß Anspruch 5 die Länge der Langlöcher kleiner ist als der lichte Abstand zwischen der ersten Steuerkammer und der zweiten Steuerkammer und wenn sich zumindest einseitig an jedes Langloch axial eine radial nach innen geschlossene Feinsteuertasche anschließt, wobei die Gesamtlänge eines ein Langloch und mindestens eine Feinsteuertasche aufweisenden Ausschnitts des Regelkolbens annähernd gleich dem lichten Abstand zwischen der ersten Steuerkammer und der zweiten Steuerkammer ist. Bevorzugt ist die Gesamtlänge des Ausschnitts geringfügig größer als der lichte Abstand zwischen den beiden genannten Steuerkammern. Durch die Feinsteuertaschen wird das Einschwingverhalten des Druckregelventils bei Sprüngen der Führungsgröße, also des Regeldrucksollwertes, positiv beeinflußt. Der Regeldrucksollwert wird durch die Einstellung des Vorsteuerventils vorgegeben. Ist dieses ein proportional z.B. mit Hilfe eines Elektromagneten ansteuerbares Druckbegrenzungsventil, so kann der Regeldrucksollwert schnell geändert werden. Ist die Gesamtlänge aus Langloch und Feinsteuertasche geringfügig größer als der lichte Abstand zwischen der ersten Steuerkammer und der zweiten Steuerkammer, so spricht man von einer negativen Überdeckung der Steuerkanten am Regelkolben und an der ersten und zweiten Steuerkammer. Es fließt dann zwar in einer Stellung des Regelkolbens, in der weder vom Druckanschluß zum Regelanschluß noch vom Regelanschluß zum Tankanschluß ein wesentlicher Volumenstrom vorhanden ist, dauernd ein Leckölstrom vom Regelanschluß zum Tankanschluß, der vom Druckanschluß her ausgeglichen werden muß. Jedoch werden dann durch die negative Überdeckung der Steuerkanten unerwünschte periodische Druckschwankungen im Regelanschluß vermieden.

Vorzugsweise schließt sich gemäß Anspruch 8 beidseitig an jedes Langloch axial jeweils eine Feinsteuertasche an. Grundsätzlich ist es möglich, die beiden Feinsteuertaschen an einem Langloch hinsichtlich ihrer Länge, ihrer Tiefe oder ihrer Breite unterschiedlich zu gestalten. Bevorzugt sind jedoch gemäß Anspruch 9 die beiden Feinsteuertaschen beidseits eines Langlochs gleich.

Erfindungsgemäß fließt dem ersten Druckraum aus dem Hohlraum des Regelkolbens über eine interne fluidische Verbindung im Regelkolben das Steueröl zu. Bevorzugt erfolgt, wie dies im Anspruch 13 angegeben ist, auch die Verbindung des Regelanschlusses mit dem zweiten Druckraum vor der anderen Stirnseite des Regelkolbens vom Hohlraum des Regelkolbens aus durch den Regelkolben hindurch.

Mit Hilfe von Dämpfungsdüsen, die gemäß Anspruch 15, 16 oder 17 angeordnet sind, kann das Verhalten des Ventils beeinflußt werden. Insbesondere wirkt sich eine Düse zwischen dem zweiten Druckraum und dem ersten Druckraum oder dem Vorsteuerventil günstig auf das Einschwingverhalten des Druckregelventils aus.

Ein Ausführungsbeispiel eines erfindungsgemäßen vorgesteuerten 3-Wege-Druckregelventils sowie zwei Arten der Vorsteuerung sind in den Zeichnungen dargestellt. Anhand der Figuren dieser Zeichnungen wird die Erfindung nun näher erläutert.

Es zeigen
- Figur 1: einen Teillängsschnitt durch das Ausführungsbeispiel mit einer ersten Art der Vorsteuerung,
- Figur 2: einen vergrößerten Ausschnitt aus Figur 1 mit einer etwas anderen Position des Regelkolbens,
- Figur 3: eine Draufsicht auf den Regelkolben in Richtung des Pfeiles A aus Figur 2,
- Figur 4: einen Schnitt entlang der Linie IV-IV aus Figur 2 und
- Figur 5: schematisch eine zweite Art der Vorsteuerung.

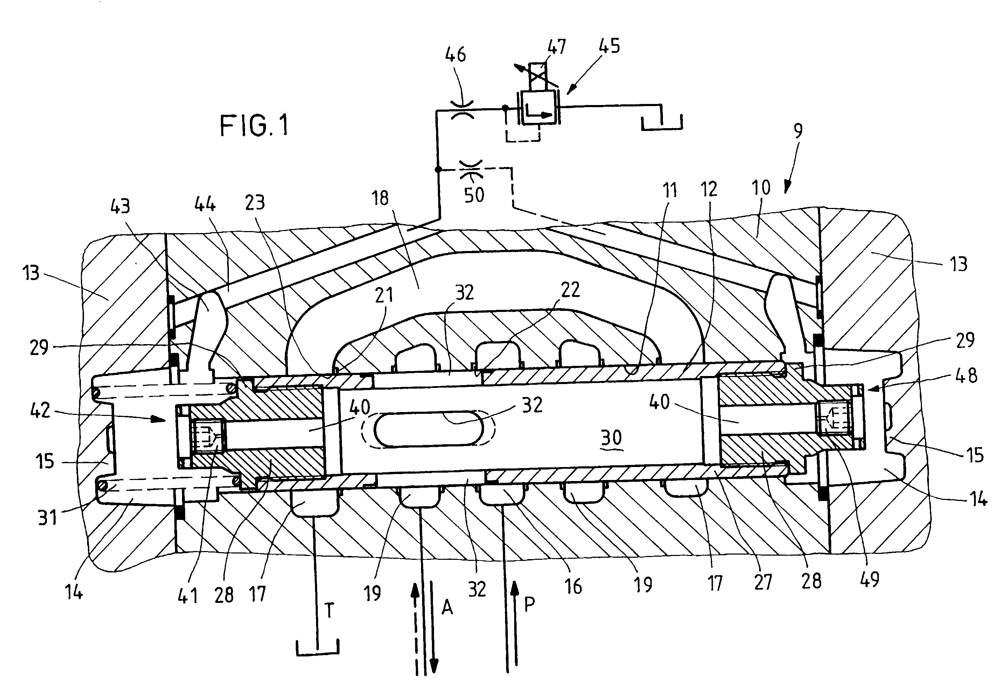

Das vorgesteuerte 3-Wege-Druckregelventil nach Figur 1 besitzt in einem Ventilgehäuse 10 seines Hauptventils 9 eine durchgehende Ventilbohrung 11, in der als Regelkolben ein Hauptkolben 12 axial verschiebbar ist. Die Ventilbohrung 11 ist an beiden Seiten durch Deckel 13 verschlossen, die mit dem Ventilgehäuse 10 verschraubt sind und in Verlängerung der Ventilbohrung eine Ausnehmung 14 mit einer zentralen Erhöhung 15 aufweisen.

Die Ventilbohrung 11 ist an mehreren axial voneinander beabstandeten Stellen zu ringkanalartigen Steuerkammern erweitert. Eine erste Steuerkammer 16 befindet sich in der Mitte der Ventilbohrung 11 und ist mit einem Druckanschluß P des Hauptventils 9 verbunden. In einem größeren Abstand von der ersten Steuerkammer 16 befinden sich zwei zweite Steuerkammern 17, die über einen Brückenkanal 18 miteinander und außerdem mit einem Tankanschluß T des Hauptventils 9 verbunden sind. Zwischen der Steuerkammer 16 und jeder Steuerkammer 17 ist eine dritte Steuerkammer 19 angeordnet, von denen nur eine als Regelanschluß A des Ventils genutzt wird. Die andere Steuerkammer 19 ist nach außen verschlossen. Auch von den zweiten Steuerkammern 17 ist nur eine genutzt, nämlich diejenige, die, von der ersten Steuerkammer 16 aus betrachtet, jenseits der genutzten dritten Steuerkammer 19 angeordnet ist. Die beiden überzähligen Steuerkammern 17 und 19 sind vorhanden, weil aus Kostengründen dasselbe Ventilgehäuse wie bei in großen Stückzahlen hergestellten vorgesteuerten 4/3-Wegeventilen verwendet wird. Wenn im folgenden eine Steuerkammer erwähnt wird, so soll damit jeweils eine genutzte Steuerkammer gemeint sein.

Zumindest an der Steuerkammer 16 und an der Steuerkammer 17 sind durch Eindrehungen 20 bzw. 21 an den voneinander abgewandten axialen Seitenflächen scharfe Steuerkanten 22 bzw. 23 gebildet, die einen bestimmten Abstand voneinander haben.

Der Regelkolben 12 besteht im wesentlichen aus drei Teilen, nämlich einem Rohr 27 sowie zwei Verschlußstücken 28, die von den beiden Stirnseiten des Rohrs 27 bis zur Anlage eines Flansches 29 an der jeweiligen Stirnseite des Rohrs 27 in dieses eingeschraubt sind. Insgesamt gesehen ist der Regelkolben 12 also ein Hohlkolben mit einem Hohlraum 30, der sich axial zwischen den beiden Verschlußstücken 28 erstreckt. Das Verhältnis zwischen dem Durchmesser des Hohlraums 30 und dem Außendurchmesser des Regelkolbens 12 beträgt etwa 0,75. Zwischen dem Flansch 29 des einen Verschlußstücks 28 und dem einen Deckel 13 ist eine Schraubendruckfeder 31 angeordnet, die den Regelkolben gegen den anderen Deckel 13 zu drücken sucht.

Der Hohlraum 30 ist zur Außenseite des Regelkolbens 12 hin durch vier sich in axialer Richtung erstreckende Langlöcher 32 offen, die in gleichmäßigen Winkelabständen über den Umfang des Regelkolbens verteilt sind. Axial enden die Langlöcher 32 in einem Kreisbogen mit einem Radius von der halben Breite eines Langlochs. Die Langlöcher 32 sind kürzer als der Abstand der Steuerkanten 22 und 23 voneinander und länger als der mittige Abstand zwischen den beiden Steuerkammern 16 und 19. Sie befinden sich in einem solchen Bereich des Regelkolbens 12, daß sie, wenn der Regelkolben, nach Figur 1 betrachtet, am rechten Deckel 13 anliegt, die Steuerkammer 16 axial etwa zur Hälfte und die Steuerkammer 19 ganz überdecken. Der Hohlraum 30 ist wesentlich länger als die Langlöcher 32 und erstreckt sich beidseitig wesentlich über die Länglöcher 32 hinaus.

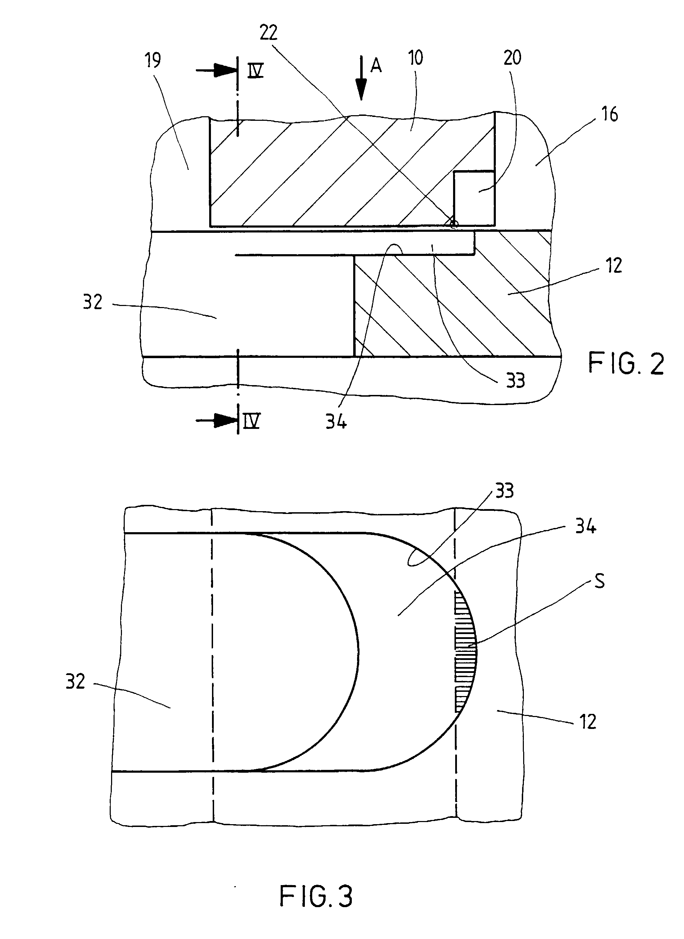

Beidseits schließt sich an jedes Langloch in axialer Richtung eine Feinsteuertasche 33 an, die radial nach innen hin durch einen ebenen Boden 34 begrenzt ist. Die beiden Feinsteuertaschen 33 zu beiden Seiten eines Langlochs 32 sind identisch zueinander ausgebildet. Sie haben dieselbe radiale Tiefe, dieselbe Breite, und zwar die Breite des Langlochs 32, und sind axial durch einen Kreisbogen begrenzt, dessen Radius gleich der halben Breite des Langlochs und der Feinsteuertaschen ist. Die Länge jeder Feinsteuertasche 33 beträgt etwa nur ein Sechstel bis ein Siebtel der Länge eines Langlochs 32. Die Gesamtlänge eines Langlochs 32 und der beiden einem Langloch zugeordneten Feinsteuertaschen 33 ist geringfügig größer als der Abstand der beiden Steuerkanten 22 und 23 voneinander. Zwischen diesen Steuerkanten am Ventilgehäuse 10 und den Langlöchern 32 mitsamt den Feinsteuertaschen 33 besteht also eine negative Überdeckung. Dies ist vor allem aus den Figuren 2 und 3 ersichtlich, in denen die Langlöcher 32 bezüglich der Steuerkanten 22 und 23 des Ventilgehäuses 10 eine mittige Lage einnehmen, in der ein mit S bezeichneter und in Figur 3 waagrecht schraffierter Öffnungsquerschnitt zwischen den Feinsteuertaschen 33 und den Steuerkanten 22 und 23 besteht.

Die beiden Verschlußstücke 28 sind zentral von einer Axialbohrung 40 durchsetzt, deren Durchmesser wesentlich kleiner als der Durchmesser des Hohlraums 30 ist. Über die Axialbohrung 40 in dem einen Verschlußstück 28 und über eine austauschbare Steuerdüse 41, die im Abstand zum Hohlraum 30 in der Axialbohrung sitzt, ist ein erster Druckraum 42, der sich vor derjenigen Stirnseite des Regelkolbens 12 befindet, die von der Schraubendruckfeder 31 beaufschlagt ist, fluidisch mit dem Hohlraum 30 verbunden. Vom Druckraum 42 besteht über eingegossene und gebohrte Kanäle 43 und 44 im Ventilgehäuse 10 eine fluidische Verbindung zu dem als Proportional-Druckbegrenzungsventil ausgebildeten Vorsteuerventil 45. In der fluidischen Verbindung ist noch eine Dämpfungsdüse 46 angeordnet, die jedoch für die grundsätzliche Funktion des Druckregelventils nicht notwendig ist. Die Einstellung des Vorsteuerventils 45 kann mit einem Proportional-Elektromagneten 47 verändert werden. Je nach der Höhe des Stromes, der durch den Elektromagneten 47 fließt, öffnet das Vorsteuerventil 45 bei einem anderen Druck an seinem Eingang.

Über die Axialbohrung 40 des anderen Verschlußstücks 28 ist ein sich von der anderen Stirnseite des Regelkolbens 12 befindlicher zweiter Druckraum 48 mit dem Hohlraum 30 verbunden, wobei in dieser Verbindung eine vorzugsweise austauschbare Dämpfungsdüse 49 angeordnet sein kann. Weiterer Verbindungen zum zweiten Druckraum 48 bedarf es an sich nicht. Bei dem Ausführungsbeispiel nach Figur 1 ist jedoch der zweite Druckraum 48 über den Kanälen 43 und 44 entsprechende Kanäle und eine darin angeordnete Dämpfungsdüse 50 mit dem ersten Druckraum 42 verbunden.

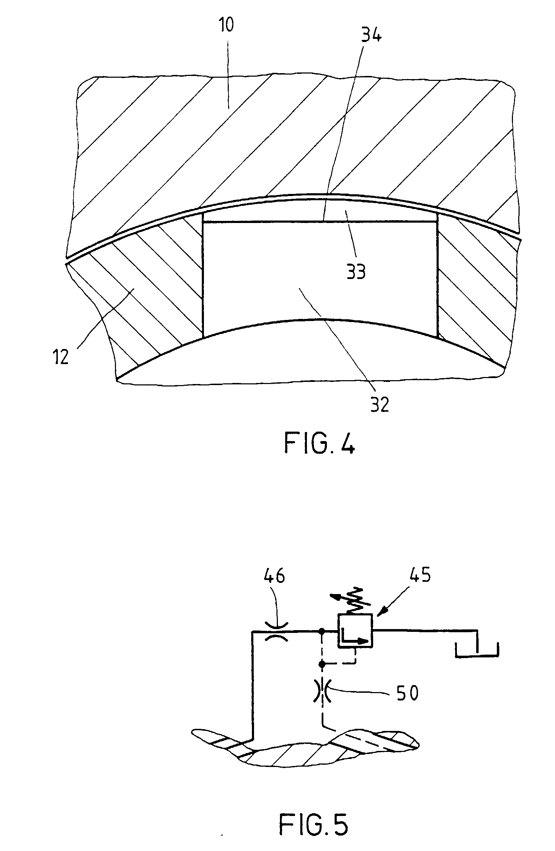

Bei der alternativen Vorsteuerung gemäß Figur 5 ist das Druckbegrenzungsventil 45 von Hand auf verschiedene Werte einstellbar. Die Dämpfungsdüse 50 ist nicht zwischen dem zweiten Druckraum und dem ersten Druckraum, sondern zwischen dem zweiten Druckraum und dem Vorsteuerventil 45 angeordnet.

In der Normalausführung eines erfindungsgemäßen vorgesteuerten 3-Wege-Druckregelventils werden zwei Düsen 41 und 46 verwendet, die gleichen Öffnungsquerschnitt haben. Die Verbindung zwischen dem Hohlraum 30 und dem zweiten Druckraum 48 ist offen, d.h. die Düse 49 ist nicht eingesetzt. Durch einen Stopfen ist die Verbindung des zweiten Druckraums 48 zum ersten Druckraum oder zum Vorsteuerventil verschlossen.

Mit Hilfe des gezeigten 3-Wege-Druckregelventils wird im Regelanschluß A ein durch die Einstellung des Vorsteuerventils vorgegebener Druck aufrechterhalten. Dabei unterscheidet man eine Druckreduzierfunktion, in der zur Aufrechterhaltung des Drucks im Regelanschluß A diesem Druckmittel vom Druckanschluß P zugeführt werden muß, eine Druckbegrenzungsfunktion, in der zur Aufrechterhaltung des Drucks im Regelanschluß A aus diesem Druckmittel zum Tankanschluß T abströmen muß, und eine Druckhaltefunktion, in der der Volumenstrom im wesentlichen Null ist und nur ein Leckölvolumenstrom ersetzt wird.

In einer Ausgangsstellung des Ventils wird der Regelkolben 12 von der Druckfeder 31 gegen den einen Deckel 13 gedrückt. Die Verbindung zwischen den Steuerkammern 16 und 19, also zwischen Druckanschluß P und Regelanschluß A ist voll geöffnet. Wenn vom Druckanschluß P zum Regelanschluß A ein Volumenstrom fließt, baut dieser einen Druck im Regelanschluß A auf. Dieser Druck wirkt über die Langlöcher 32, den Hohlraum 30, die Axialbohrung 40 in dem einen Verschlußstück 28 und die Steuerdüse 41 im ersten Druckraum 42 und über das andere Verschlußstück 28 auch im zweiten Druckraum 48. Der maximale Öffnungsquerschnitt zwischen Druckanschluß P und Regelanschluß A bleibt zunächst erhalten, bis der Druck im Regelanschluß A den am Vorsteuerventil 45 eingestellten Wert erreicht. Das Vorsteuerventil 45 öffnet, und es beginnt ein Steuervolumenstrom aus dem Hohlraum 30 über die Steuerdüse 41, den ersten Druckraum 42, die Kanäle 43 und 44 sowie die Dämpfungsdüse 46 und dem geöffneten Steuerquerschnitt des Druckbegrenzungsventils 45 zum Tank abzufließen. Wenn der Steuervolumenstrom so groß ist, daß das kritische Druckgefälle an der Steuerdüse 41, das der Vorspannkraft der Druckfeder 31 bezogen auf die druckbeaufschlagte Querschnittsfläche des Regelkolbens 12 entspricht, in Höhe von z.B. 2 bar überschritten wird, bewegt sich der Regelkolben 12, nach Figur 1 betrachtet, nach links und drosselt die Verbindung vom Druckanschluß P zum Regelanschluß A soweit ab, bis ein neues Kräftegleichgewicht am Regelkolben 12 erreicht ist. Dabei wird der durch die Einstellung des Vorsteuerventils 45 vorgegebene Druck im Regelanschluß A weitgehend unabhängig vom Volumenstrom von P nach A und weitgehend unabhängig von dem Druckniveau in P aufrechterhalten. Vorausgesetzt ist natürlich, daß die Druckdifferenz von P nach A mindestens so groß wie der Durchflußwiderstand des Ventils bei dem betrachteten Volumenstrom ist.

Wenn der Druck in A durch die Einwirkung äußerer Kräfte z.B. auf einen Zylinder den durch das Vorsteuerventil 45 vorgegebenen Wert überschreitet, so wirkt dieser Druck im zweiten Druckraum 48 und verschiebt den Regelkolben 12 so weit nach links, bis die Verbindung von A nach T an der Steuerkante 23 und den entsprechenden Feinsteuerkanten geöffnet wird. Dabei wird weitgehend unabhängig vom Volumenstrom von A nach T der Druck in A entsprechen den am Vorsteuerventil 45 eingestellten Wert konstant gehalten. Der Anschluß P ist im Verlauf dieser Druckbegrenzungsfunktion des Ventils gesperrt.

Wenn im Anschluß A z.B. bei Stillstand eines Hydrozylinders oder eines Hydromotors kein Volumenstrom benötigt wird, arbeitet das Ventil in Druckhaltefunktion. Dabei wird der Regelkolben 12 von seiner Ausgangsstellung so weit nach links verschoben, daß der Steuerquerschnitt an der Steuerkante 22 des Ventilgehäuses 10 nur so weit geöffnet bleibt, daß der für die Druckregelung notwendige Steuerölvolumenstrom aufrechterhalten, eventuelle Leckölverluste in A ausgeglichen werden und ein wegen der negativen Überdeckung eventuell vorhandener Leckölstrom von A nach T ersetzt wird.

## Patentansprüche

1. Vorgesteuertes 3-Wege-Druckregelventil mit einem direktgesteuerten Druckbegrenzungsventil als Vorsteuerventil (45), mit einem Hauptventil (9), das in einem Ventilgehäuse (10) eine Ventilbohrung (11) mit einer ersten, mit einem Druckanschluß (P) verbundenen Steuerkammer (16), mit einer zweiten, mit einem Tankanschluß (T) verbundenen Steuerkammer (17) und mit einer dritten, mit einem Regelanschluß (A) verbundenen, mittleren Steuerkammer (19) sowie einen in der Ventilbohrung (11) verschiebbaren Regelkolben (12) aufweist, über den die dritte Steuerkammer (19) mit der ersten Steuerkammer (16) oder mit der zweiten Steuerkammer (17) verbindbar ist und der von dem in einem vor seiner einen Stirnseite gelegenen ersten Druckraum (42) herrschenden Druck und der Kraft einer Federanordnung (31) im Sinne einer Verbindung der dritten Steuerkammer (19) mit der ersten Steuerkammer (16) und von dem Druck in einem vor seiner anderen Stirnseite gelegenen zweiten Druckraum (48) im Sinne einer Verbindung der dritten Steuerkammer (19) mit der zweiten Steuerkammer (17) beaufschlagbar ist, wobei von dem ersten Druckraum (42) einerseits über eine Steuerdüse (41) am Regelkolben (12) und durch den Regelkolben (12) hindurch eine fluidische Verbindung zum Regelanschluß (A) und andererseits eine fluidische Verbindung zum Vorsteuerventil (45) besteht und wobei auch vom zweiten Druckraum (48) eine fluidische Verbindung zum Regelanschluß (A) besteht, **dadurch gekennzeichnet**, daß der Regelkolben (12) als Hohlkolben mit einem Hohlraum (30) ausgebildet ist, daß sich in der den Hohlraum (30) radial begrenzenden Wand mehrere über den Umfang des Regelkolbens (12) verteilte, die Wand durchbrechende, axial verlaufende Langlöcher (32) befinden, die länger als der lichte Abstand zwischen zwei Steuerkammern (16, 19; 17, 19) sind, und daß der Hohlraum (30) über die Steuerdüse (41) fluidisch mit dem ersten Druckraum am Regelkolben (12) verbunden ist.

2. Vorgesteuertes 3-Wege-Druckregelventil nach Anspruch 1, **dadurch gekennzeichnet**, daß der Hohlraum (30) beidseitig wesentlich länger als die Langlöcher (32) ist.

3. Vorgesteuertes 3-Wege-Druckregelventil nach Anspruch 1 oder 2, **dadurch gekennzeichnet**, daß das Verhältnis zwischen dem Durchmesser des Hohlraums (30) und dem Außendurchmesser des Regelkolbens (12) zwischen 0,7 und 0,8 liegt.

4. Vorgesteuertes 3-Wege-Druckregelventil nach Anspruch 1, 2 oder 3, **dadurch gekennzeichnet**, daß die Länge eines Langlochs (32) wenigstens so groß wie der mittige Abstand zweier Steuerkammern (16, 19; 17, 19) ist.

5. Vorgesteuertes 3-Wege-Druckregelventil nach einem der Ansprüche 1 bis 4, **dadurch gekennzeichnet**, daß die Länge der Langlöcher (32) kleiner ist als der lichte Abstand zwischen der ersten Steuerkammer (16) und der zweiten Steuerkammer (17), daß sich zumindest einseitig an jedes Langloch (32) axial eine radial nach innen geschlossene Feinsteuertasche (33) anschließt und daß die Gesamtlänge eines ein Langloch (32) und mindestens eine Feinsteuertasche (33) aufweisenden Ausschnitts des Regelkolbens (12) annähernd gleich dem lichten Abstand, vorzugsweise geringfügig größer als der lichte Abstand zwischen der ersten Steuerkammer (16) und der zweiten Steuerkammer (17) ist.

6. Vorgesteuertes 3-Wege-Druckregelventil nach Anspruch 5, **dadurch gekennzeichnet**, daß eine sich an ein Langloch (32) anschließende Feinsteuertasche (33) dieselbe Breite wie das Langloch (32) besitzt.

7. Vorgesteuetes 3-Wege-Druckregelventil nach Anspruch 5 oder 6, **dadurch gekennzeichnet**, daß eine Feinsteuertasche (33) mit einem Kreisbogen abschließt, dessen Radius gleich der halben Breite der Feinsteuertasche (33) ist.

8. Vorgesteuertes 3-Wege-Druckregelventil nach Anspruch 5, 6 oder 7, **dadurch gekennzeichnet**, daß sich beidseitig an jedes Langloch (32) axial jeweils eine Feinsteuertasche (33) anschließt.

9. Vorgesteuertes 3-Wege-Druckregelventil nach Anspruch 8, **dadurch gekennzeichnet**, daß die beiden Feinsteuertaschen (33) beidseits eines Langlochs (32) gleich sind.

10. Vorgesteuertes 3-Wege-Druckregelventil nach Anspruch 9, **dadurch gekennzeichnet**, daß ein Langloch (32) etwa sechs- bis siebenmal so lang wie eine Feinsteuertasche (33) ist.

11. Vorgesteuertes 3-Wege-Druckregelventil nach Anspruch 8, **dadurch gekennzeichnet**, daß sich die beiden Feinsteuertaschen (33) beidseits eines Langlochs (32) voneinander unterscheiden.

12. Vorgesteuertes 3-Wege-Druckregelventil nach einem vorhergehenden Anspruch, **dadurch gekennzeichnet**, daß zwischen der Steuerdüse (41) und dem Hohlraum (30) eine axiale Bohrung (40) mit gegenüber dem Hohlraum (30) verringerten Durchmesser verläuft.

13. Vorgesteuertes 3-Wege-Druckregelventil nach einem vorhergehenden Anspruch, **dadurch gekennzeichnet**, daß die Verbindung des Regelanschlusses (A) mit dem zweiten Druckraum (48) vom Hohlraum (30) des Regelkolbens (12) aus durch den Regelkolben (12) hindurch erfolgt.

14. Vorgesteuertes 3-Wege-Druckregelventil nach Anspruch 13, **dadurch gekennzeichnet**, daß vom Hohlraum (30) eine in Richtung zweiter Druckraum (48) verlaufende gegenüber dem Hohlraum (30) engere axiale Bohrung (40) ausgeht.

15. Vorgesteuertes 3-Wege-Druckregelventil nach einem vorhergehenden Anspruch, **dadurch gekennzeichnet**, daß dem zweiten Druckraum (48) zum Regelanschluß (A) hin eine Dämpfungsdüse (49) vorgeschaltet ist.

16. Vorgesteuertes 3-Wege-Druckregelventil nach einem vorhergehenden Anspruch, **dadurch gekennzeichnet**, daß der erste Druckraum (42) mit dem Vorsteuerventil (45) über eine Dämpfungsdüse (46) fluidisch verbunden ist.

17. Vorgesteuertes 3-Wege-Druckregelventil nach einem vorhergehenden Anspruch, **dadurch gekennzeichnet**, daß der zweite Druckraum (48) über eine Dämpfungsdüse (50) mit dem ersten Druckraum (42) oder mit dem Vorsteuerventil (45) verbunden ist.

## Claims

1. Pilot operated 3-way pressure control valve with a directly controlled pressure limiting valve (45) as a pilot valve, with a main valve (9) that has, in a valve housing (10), a valve bore (11) with a first control chamber (16) connected with a pressure connection (P), with a second control chamber (17) connected with a tank connection (T), and with a third central control chamber (19) connected with a control connection (A) as well as a control piston (12) displaceable in the valve bore (11), by which the third control chamber (19) can be connected with the first control chamber (16) or with the second control chamber (17) and which can be acted upon by the pressure prevailing in a first pressure chamber (42) located in front of its one end and the force of a spring arrangement (31) in the direction of a connection between the third control chamber (19) and the first control chamber (16), and by the pressure in a second pressure chamber (48) located in front of its other end in the direction of a connection between the third control chamber (19) and the second control chamber (17), wherein a fluid connection is established leading from the first pressure chamber (42) via a control nozzle (41) on control piston (12) and through the control piston (12) to the control connection (A) on the one hand and a fluid connection leading to the pilot valve (45) on the other hand, and a fluid connection is similarly established from the second pressure chamber (48) to the control connection (A), **characterized in that** the control piston (12) is formed as a hollow piston with a hollow chamber (30), in that a plurality of oblong holes (32) that are distributed over the circumference of the control piston (12), pass through the wall, and run axially, are located in the wall that radially delimits the hollow chamber (30), which holes are longer than the clearance between two control chambers (16, 19; 17, 19), and in that the hollow chamber (30) is fluidically connected via the control nozzle (41) with the first pressure chamber at the control piston (12).

2. Pilot operated 3-way pressure control valve according to claim 1, **characterized in that** the hollow chamber (30) is substantially longer on both sides than the oblong holes (32).

3. Pilot operated 3-way pressure control valve according to claim 1 or 2, **characterized in that** the ratio between the diameter of the hollow chamber (30) and the outside diameter of the control piston (12) is between 0.7 and 0.8.

4. Pilot operated 3-way pressure control valve according to claim 1, 2, or 3, **characterized in that** the length of an oblong hole (32) is at least as great as the central spacing between two control chambers (16, 19; 17, 19).

5. Pilot operated 3-way pressure control valve according to one of the claims 1 to 4, **characterized in** **that** the length of the oblong holes (32) is less than the clearance between the first control chamber (16) and the second control chamber (17), in that a radially internally closed fine control pocket (33) axially adjoins each oblong hole (32) at least on one side, and in that the total length of a portion of the control piston (12) that has an oblong hole (32) and at least one fine control pocket (33) is approximately equal to the clearance, preferably slightly larger than the clearance, between the first control chamber (16) and the second control chamber (17).

6. Pilot operated 3-way pressure control valve according to claim 5, **characterized in that** a fine control pocket (33) adjoining an oblong hole (32) has the same width as the oblong hole (32).

7. Pilot operated 3-way pressure control valve according to claim 5 or 6, **characterized in that** a fine control pocket (33) closes with an arc whose radius is equal to half the width of the fine control pocket (33).

8. Pilot operated 3-way pressure control valve according to claim 5, 6, or 7, **characterized in that** a fine control pocket (33) adjoins each oblong hole (32) axially on each side.

9. Pilot operated 3-way pressure control valve according to claim 8, **characterized in that** the two fine control pockets (33) on both sides of an oblong hole (32) are the same.

10. Pilot operated 3-way pressure control valve according to claim 9, **characterized in that** an oblong hole (32) is approximately six to seven times as long as a fine control pocket (33).

11. Pilot operated 3-way pressure control valve according to claim 8, **characterized in that** the two fine control pockets (33) on both sides of an oblong hole (32) differ from one another.

12. Pilot operated 3-way pressure control valve according to a preceding claim, **characterized in that** an axial bore (40) with a diameter smaller than that of the hollow chamber (30) runs between the control nozzle (41) and the hollow chamber (30).

13. Pilot operated 3-way pressure control valve according to a preceding claim, **characterized in that** the connection of the control connection (A) with the second pressure chamber (48) from the hollow chamber (30) of the control piston (12) occurs through the control piston (12).

14. Pilot operated 3-way pressure control valve according to claim 13, **characterized in that** an axial bore (40) runs the from hollow chamber (30) in the direction of the second pressure chamber (48) and is narrower than the hollow chamber (30).

15. Pilot operated 3-way pressure control valve according to a preceding claim, **characterized in that** a damping nozzle (49) is connected in front of the second pressure chamber (48) towards the control connection (A).

16. Pilot operated 3-way pressure control valve according to a preceding claim, **characterized in that** the first pressure chamber (42) is connected fluidly with the pilot valve (45) via a damping nozzle (46).

17. Pilot operated 3-way pressure control valve according to a preceding claim, **characterized in that** the second pressure chamber (48) is connected via a damping nozzle (50) with the first pressure chamber (42) or with the pilot valve (45).

## Revendications

1. Un régulateur de pression piloté à trois voies doté d'un limiteur de pression à action directe en tant que valve (45) de pilotage, doté d'une valve (9) principale, qui dans un corps (10) de valve présente un alésage (11) de valve pourvu d'une première chambre (16) de commande raccordée à un orifice (P) de pression, d'une deuxième chambre (17) de commande raccordée à un orifice (T) de réservoir et d'une troisième chambre (19) de commande médiane raccordée à un orifice (A) de régulation, ainsi qu'un tiroir (12) de régulation pouvant être amené à coulisser dans l'alésage (11) de valve, lequel permet de raccorder la troisième chambre (19) de commande à la première chambre (16) de commande ou à la deuxième chambre (17) de commande, lequel peut être sollicité dans le sens d'un raccord de la troisième chambre (19) de commande avec la première chambre (16) de commande par la pression régnant dans une première chambre (42) de pression, disposée devant une de ses extrémités, ainsi que par la force exercée par un système (31) de ressort, et lequel peut être sollicité dans le sens d'un raccord de la troisième chambre (19) de commande avec la deuxième chambre (17) de commande par la pression régnant dans une deuxième chambre (48) de pression, disposée devant l'autre extrémité, cependant qu'à partir de la première chambre (42) de pression sont établies une communication du fluide vers l'orifice (A) de régulation d'une part, au travers d'un gicleur (41) de commande au niveau du tiroir (12) de régulation puis au travers du corps du tiroir (12) de régulation, et une communication du fluide vers la valve (45) de pilotage d'autre part, et cependant qu'à partir de la deuxième chambre (48) de pression est également établie une communication du fluide vers l'orifice (A) de régulation, **caractérisé en ce que** le tiroir (12) de régulation est conçu sous forme d'un tiroir creux avec une chambre (30) creuse, que dans la paroi délimitant la chambre (30) creuse sont disposés plusieurs trous (32) oblongs, lesquels sont répartis autour du manteau du tiroir (12) de régulation, traversent la paroi et sont orientés dans la direction axiale et lesquels sont plus longs que la largeur de l'espace séparant deux chambres (16, 19 ; 17, 19) de commande l'une de l'autre, et qu'est établie une communication du fluide de la chambre (30) creuse vers la première chambre de pression au niveau du tiroir (12) de régulation, au travers du gicleur (41) de commande.

2. Un régulateur de pression piloté à trois voies conforme à la revendication n° 1, **caractérisé en ce que** la chambre (30) creuse est nettement plus longue des deux côtés que les trous (32) oblongs.

3. Un régulateur de pression piloté à trois voies conforme à la revendication n° 1 ou n° 2, **caractérisé en ce que** le rapport entre le diamètre de la chambre (30) creuse et le diamètre extérieur du tiroir (12) de régulation est compris entre 0,7 et 0,8.

4. Un régulateur de pression piloté à trois voies conforme à la revendication n° 1, n° 2 ou n° 3, **caractérisé en ce que** la longueur d'un trou (32) oblong est au moins égale à la distance qui sépare deux chambres (16, 19 ; 17, 19) de commande, mesurée au niveau de leur centre.

5. Un régulateur de pression piloté à trois voies conforme à une des revendications n° 1 à n°4, **caractérisé en ce que** la longueur des trous (32) oblongs est inférieure à la largeur de l'espace séparant la première chambre (16) de commande et la deuxième chambre (17) de commande l'une de l'autre, qu'une poche (33) de réglage fin. fermée vers l'intérieur dans la direction radiale, est adjointe dans la direction axiale à au moins une extrémité de chacun des trous (32) oblongs, et que la longueur totale d'une section du tiroir (12) de régulation, qui présente un trou (32) oblong et au moins une poche (33) de réglage fin, est à peu près égale ou, de préférence, légèrement supérieure, à la largeur de l'espace séparant la première chambre (16) de commande et la deuxième chambre (17) de commande l'une de l'autre.

6. Un régulateur de pression piloté à trois voies conforme à la revendication n° 5, **caractérisé en ce que** une poche (33) de réglage fin, qui est adjointe à un trou (32) oblong, présente une largeur identique à celle du trou (32) oblong.

7. Un régulateur de pression piloté à trois voies conforme à la revendication n° 5 ou n° 6, **caractérisé en ce que** une poche (33) de réglage fin se termine par un arc de cercle, dont le rayon est égal à la moitié de la largeur de la poche (33) de réglage fin.

8. Un régulateur de pression piloté à trois voies conforme à la revendication n° 5, n° 6 ou n° 7, **caractérisé en ce que** une poche (33) de réglage fin est adjointe de chaque côté de chaque trou (32) oblong, dans la direction axiale.

9. Un régulateur de pression piloté à trois voies conforme à la revendication n° 8, **caractérisé en ce que** les deux poches (33) de réglage fin, qui sont disposées de chaque côté d'un trou (32) oblong, sont identiques.

10. Un régulateur de pression piloté à trois voies conforme à la revendication n° 9, **caractérisé en ce que** un trou (32) oblong est environ six à sept fois plus long qu'une poche (33) de réglage fin.

11. Un régulateur de pression piloté à trois voies conforme à la revendication n° 8, **caractérisé en ce que** les deux poches (33) de réglage fin, qui sont disposées de chaque côté d'un trou (32) oblong, diffèrent l'une de l'autre.

12. Un régulateur de pression piloté à trois voies conforme à une revendication précédente, **caractérisé en ce que** un forage (40) axial, de diamètre inférieur à celui de la chambre (30) creuse, relie le gicleur (41) de commande avec la chambre (30) creuse.

13. Un régulateur de pression piloté à trois voies conforme à une revendication précédente, **caractérisé en ce que** la connexion de l'orifice (A) de régulation avec la deuxième chambre (48) de pression est effectuée à partir de la chambre (30) creuse du tiroir (12) de régulation au travers du tiroir (12) de régulation.

14. Un régulateur de pression piloté à trois voies conforme à la revendication n° 13, **caractérisé en ce que** un forage (40) axial, qui est plus étroit que la chambre (30) creuse, part de la chambre (30) creuse dans la direction de la deuxième chambre (48) de pression.

15. Un régulateur de pression piloté à trois voies conforme à une revendication précédente, **caractérisé en ce que** un gicleur (49) d'amortissement est raccordé en amont de la deuxième chambre (48) de pression, dans le sens de l'orifice (A) de régulation.

16. Un régulateur de pression piloté à trois voies conforme à une revendication précédente, **caractérisé en ce que** la première chambre (42) de pression est raccordée à la valve (45) de pilotage, en termes de passage de fluide, au travers d'un gicleur (46) d'amortissement.

17. Un régulateur de pression piloté à trois voies conforme à une revendication précédente, **caractérisé en ce que** c'est au travers d'un gicleur (50) d'amortissement que la deuxième chambre (48) de pression est raccordée à la première chambre (42) de pression ou à la valve (45) de pilotage.
